(19)

**Europäisches Patentamt**
**European Patent Office**
**Office européen des brevets**

(11) **EP 4 057 674 A1**

(12) **EUROPEAN PATENT APPLICATION**

(43) Date of publication:
**14.09.2022 Bulletin 2022/37**

(51) International Patent Classification (IPC):
***H04W 24/04*** *(2009.01)* ***H04W 28/18*** *(2009.01)*

(21) Application number: **22160573.6**

(52) Cooperative Patent Classification (CPC):
**H04W 24/04; H04W 28/18**

(22) Date of filing: **07.03.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.03.2021 US 202117197458**

(71) Applicant: **Sierra Wireless, Inc.**
**Richmond, British Columbia V6V 3A4 (CA)**

(72) Inventors:
• **VOS, Gustav Gerald**
**Surrey, British Columbia, V4P 0B3 (CA)**
• **D'SOUZA, Derrell**
**Victoria, British Columbia, V8N 4Z6 (CA)**
• **JOHNSON, Andrew Ian**
**Vancouver, V6K 2S5 (CA)**

(74) Representative: **Mewburn Ellis LLP**
**Aurora Building**
**Counterslip**
**Bristol BS1 6BX (GB)**

(54) **METHOD AND APPARATUS FOR MANAGING COMMUNICATION CHARACTERISTICS IN A WIRELESS NETWORK**

(57) There is provided a method and apparatus for managing communication characteristics in a wireless network. The method includes obtaining, by the network device, information indicative of operational characteristics of one or more of a configuration of a deployed network, signal strength, network congestion and the network device and determining a degradation associated with each of the one or more of the configuration of the deployed network, the signal strength, the network congestion and the network device, based at least in part on the obtained information. In some embodiments, the method further includes determining an extent of speed degradation based on each of the determined degradations.

EP 4 057 674 A1

**Description**

**FIELD OF THE INVENTION**

The present invention pertains to the field of wireless communication and in particular to a method and apparatus for managing communication characteristics in a wireless network.

**BACKGROUND**

In wireless networks, users do not always experience optimal speed on their mobile device. For example, the measured speed of a network may be far below the operational capabilities of a user device (i.e. the maximum speed that the device can support). The network speed can be measured at a user device using various network speed measurement platforms such as Speedtest™ by Ookla™ (i.e. speedtest.net), Google™, Mlabs™, Cisco™, Mobispeed™, Rootmetrics™, etc. However, these network speed measurement tools do not provide information required to troubleshoot and fix problems related to network speed. As a large number of factors can be involved, it is often complicated for users to understand why they are experiencing network speed degradation and therefore it can be challenging to resolve one or more issues relating to network speed degradation.

Furthermore, conventional network speed measurement tools are not always beneficial in terms of understanding and resolving network speed degradation as the conventional tools generally measure the network speed only at the end server. In fact, backhaul and end servers are often bottleneck points in wireless communication networks where very high speed wireless links (e.g. 5G NR (New Radio) in Millimeter wave (mmWAVE)) are used and where links that are greatly affected by installation location and direction of wave propagation are used.

Existing network performance measurement tools, such as Speedtest™, Opensignal™ and Qualcomm extensible Diagnostic Monitor (QXDM™), measure network speed, latency, jitter and packet loss, and can also perform crowdsourcing of the measurement results. There are also solutions like MobiQ™ that extract or analyze network information using collected RRC messages.

However, it has been realized that existing solutions and tools do not monitor or analyze a number of different network performance degradation factors for example network congestion or network configuration. This lack of information may result in inaccurate diagnosis of network performance degradation and therefore an optimal solution for network performance enhancement may not be identified.

In light of the above, there is a need for a method and apparatus for managing operational characteristics of a wireless network, that is not subject to one or more limitations of the prior art.

This background information is provided to reveal information believed by the applicant to be of possible relevance to the present invention. No admission is necessarily intended, nor should be construed, that any of the preceding information constitutes prior art against the present invention.

**SUMMARY**

An object of embodiments of the present disclosure is to provide a method and apparatus for managing communication characteristics in a wireless network. In accordance with embodiments of the present invention, there is provided a method for evaluating communication in a wireless network. The method includes obtaining, by a network device, information indicative of operational characteristics of one or more of a configuration of a deployed network, signal strength, network congestion and the network device. The method further includes determining one or more degradations based at least in part on the obtained information, each of the one or more degradations associated with one or more of the configuration of the deployed network, the signal strength, the network congestion and the network device.

In some embodiments, the one or more degradations are determined based at least in part on information obtained from one or more physical layer grants received from a base station. In some embodiments, the one or more degradations are determined based at least in part on information obtained from one or more control messages received from a base station.

In some embodiments, the degradation associated with configuration of the deployed network is determined based on one or more capabilities of the deployed network including deployed spectral bandwidth, supported spatial multiplexing, supported maximum modulation, and supported maximum code rate. In some embodiments, the degradation associated with the configuration of the deployed network is determined based on a difference between a maximum speed supported by the network device and a maximum theoretical speed achievable under perfect signal conditions.

In some embodiments, the degradation associated with the signal strength is determined based on a maximum possible modulation and coding rate and a modulation and coding rate assigned by a base station, the maximum possible modulation being determined based on a maximum possible transport block size, the modulation and coding rate assigned by the base station being determined based on a transport block size allocated by the base station. In some embodiments, the degradation associated with network congestion is determined based on difference between a maximum possible bandwidth deployed by the wireless network and an actual bandwidth assigned by a base station. In some embodiments, the degradation associated with the network device is determined based on technical issues related to the network device including one or more of malfunctioning antenna, device over-temperature and interoperability issues.

In some embodiments, the method further includes determining an extent of speed degradation based on the determined one or more degradations. In some embodiments, the method further includes displaying one or more of the determined extent of speed degradation to a user in comparison with maximum capabilities of the network device and actionable remediations based on the determined extent of speed degradation.

In accordance with embodiments of the present invention, there is provided a network device including a network interface for receiving data from and transmitting data to network devices connected to a wireless network, a processor and machine readable memory storing machine executable instructions. The machine executable instructions, when executed by the processor configure the network device to obtain information indicative of operational characteristics of one or more of a configuration of a deployed network, signal strength, network congestion and the network device. The machine executable instructions, when executed by the processor further configure the network device to determine a degradation associated with each of the one or more of the configuration of the deployed network, the signal strength, the network congestion and the network device, based at least in part on the obtained information.

Embodiments have been described above in conjunctions with aspects of the present invention upon which they can be implemented. Those skilled in the art will appreciate that embodiments may be implemented in conjunction with the aspect with which they are described, but may also be implemented with other embodiments of that aspect. When embodiments are mutually exclusive, or are otherwise incompatible with each other, it will be apparent to those skilled in the art. Some embodiments may be described in relation to one aspect, but may also be applicable to other aspects, as will be apparent to those of skill in the art.

## BRIEF DESCRIPTION OF THE FIGURES

Further features and advantages of the present invention will become apparent from the following detailed description, taken in combination with the appended drawings, in which:

FIG. 1 illustrates an example of measured congestion levels per transmit time interval (TTI) over a certain test period, in accordance with embodiments.

FIG. 2 illustrates an example of measured signal degradation levels per TTI over a certain test period, in accordance with embodiments.

FIG. 3 illustrates a method for managing communication characteristics in a wireless network, in accordance with embodiments.

FIG. 4 is a schematic diagram of an electronic device, according to embodiments.

It will be noted that throughout the appended drawings, like features are identified by like reference numerals.

## DETAILED DESCRIPTION

There is provided a method and apparatus for managing communication characteristics in a wireless network. According to embodiments there is provided a method and apparatus tool that may help to more accurately understand or identify why communication speed, for example network speed, has been degraded and may optionally provide or suggest solutions for communication speed degradation in order to improve for example network speed.

The present disclosure provides methods and apparatuses for improving communication in a wireless network by discovering and calculating various factors that cause communication speed degradation, for example network speed degradation. The methods and apparatuses can further find and suggest or identify solutions for enhancing communication speed, for example network speed, based on the calculated factors. According to embodiments, there is provided a method for identifying why communication speed degradation occurs in network devices, such as a router or a user equipment (UE), in wireless networks. Communication speed degradation, for example network speed degradation, can occur due to a number of different factors including network congestion, network configuration and capabilities, network signal quality and various device problems including technical issues associated with network devices (e.g. antenna malfunction, device over-heating, interoperability issues). In various embodiments, physical layer grants (e.g. uplink (UL) and downlink (DL) grants) can be utilized to determine network speed degradations related to network congestion and network signal quality. Radio resource control (RRC) messages and crowdsourcing can be also utilized to determine network speed degradations. Network degradations can be calculated and demonstrated in association with the network device capability (e.g. as a percentage of maximum network device (e.g. user equipment (UE)) capability). In some embodiments, one or more remediation actions may be provided or suggested in view of one or more of the identified network speed degradation factors.

In some embodiments, the aforesaid physical layer grants (e.g. UL grants and DL grants) can be utilized to determine communication speed degradations associated with one or more of the configuration of the deployed network, signal strength, network congestion and one or more characteristics of the network device.

In some embodiments, control messages from the base station can be utilized to determine communication speed degradations associated with one or more of the configuration of the deployed network, signal strength, network congestion and one or more characteristics of the network device.

According to embodiments, there are provided methods and apparatuses that can detect and quantify one or more communication speed degradation factors based on analysis of signaling from the base station. Based on the detected and quantified network speed degradation factors, a solution for network speed improvement can be provided or suggested.

According to embodiments, degradation related to a network device's maximum speed is defined in Equation 1.

$$DeviceMaxSpeed = MeasuredSpeed + <degradation> \qquad (1)$$

where *DeviceMaxSpeed* represents the maximum data speed that the network device can support in Mbps; *MeasuredSpeed* represents the speed, in Mbps, measured at the network device connected to the wireless network, and <degradation> represents the speed lost at the network device due to wireless network speed degradation.

For example, when the maximum speed that the network device can support (i.e. *DeviceMaxSpeed)* is 600 Mbps and the speed measured at the network device (i.e. *MeasuredSpeed)* is 150 Mbps, then the speed lost at the network device due to network speed degradation (i.e. *<degradation>*) will be 600 - 150 = 450 Mbps. Accordingly, the percentage degradation is (*<degradation> / DeviceMaxSpeed)* $\times$ 100 = 450/600 $\times$ 100 = 75%.

In a cellular wireless network, network speed degradation can occur due to at least one more of the following reasons: deployed network (i.e. configuration and capabilities), signal strength, network congestion (e.g. bottlenecks), network device problems including technical issues associated with the network device (e.g. antenna malfunction, device over-heating, various interoperability issues).

According to embodiments, further discussed herein are methods enabling the calculation of the degree of network speed degradation for each of the aforementioned factors which may be a cause network speed degradation.

*Degradation due to Deployed Network*

Network speed degradation can be caused by the configuration and capabilities of the deployed network. For example, network speed degradation may be result of differences in capabilities between the network device and the network itself. If capabilities of the network are equal to or greater than those of the network device, it can be considered that there is no network speed degradation due to the deployed network. On the contrary, if capabilities of the network are less than those of the network device, network speed degradation can be considered to occur due to the deployed network. The extent of network speed degradation due to the deployed network can be determined based at least in part on one or more capabilities of the deployed network. For example, capabilities of the network may be considered to include deployed spectral bandwidth; supported spatial multiplexing (e.g. multiple-input and multiple-output (MIMO)); supported maximum modulation; and supported maximum code rate (e.g. modulation coding scheme (MCS) table). Other capabilities of the network that may be considered to potentially impact network speed degradation would be readily understood by a worker skilled in the art.

According to embodiments, a first method for determining network speed degradation due to the deployed network can be used when the transport block size (TBS), the amount of data sent in one transmit time interval (TTI) for a specified bandwidth, is linear to the specified bandwidth. According to embodiments, a second method for determining network speed degradation due to the deployed network can be used wherein the TBS is determined based on the protocol specification (e.g. TBS tables).

According to the first method for calculating the network speed degradation due to the deployed network, the deployed network speed degradation can be calculated based on combination of individual degradations. The individual degradations can include one or more of spectral bandwidth degradation, spatial multiplexing degradation, maximum modulation degradation and code rate degradation. According to this method, the percentage of the network speed degradation due to the deployed network can be calculated as defined in Equation 2 below.

$$DegNW = 1 - (1-DegBW) \times (1-DegSpatial) \times (1-DegMod) \times (1-DegCode)$$

$$(2)$$

where *DegBW* represents spectral bandwidth degradation; *DegSpatial* represents spatial multiplexing degradation; *DegMod* represents maximum modulation degradation and *DegCode* represents code rate degradation.

According to embodiments the spectral bandwidth degradation (i.e. *DegBW*) can be determined as defined in Equation 3.

$$DegBW = (MaxBWDevice - MaxBWNetwork)/MaxBWDevice \qquad (3)$$

where *MaxBWDevice* represents the maximum bandwidth that the device can support; *MaxBWNetwork* represents the bandwidth deployed by mobile network operator (MNO) including carrier aggregation (CA) when applicable.

In various embodiments, *MaxBWNetwork* can be obtained from the over-the-air (OTA) control messages from the base station. For example, in case of Long-Term Evolution (LTE) downlink (DL), the *dl-Bandwidth* parameter in the master information block (MIB) may be indicative of the bandwidth of the primary carrier. The *dl-Bandwidth* parameter in *rrcConnectionReconfiguration* or *rrcConnectionSetup* messages may be indicative of the bandwidth of one or more secondary cells used for carrier aggregation.

According to embodiments, the spatial multiplexing degradation (i.e. *DegSpatial*) can be determined as defined in Equation 4.

$$DegSpatial = (MaxLayersDevice - MaxLayersNetwork)/MaxLayersDevice$$

$$(4)$$

where *MaxLayersDevice* represents the maximum spatial layers (e.g. MIMO layers) the device can support; and *MaxLayersNetwork* represents the maximum spatial layers that the network uses.

In various embodiments, *MaxLayersNetwork* can be obtained from the OTA control messages between the network device and the base station. For example, in case of LTE, the *transmissionMode* parameter in the *rrcConnectionReconfiguration* or *rrcConnectionSetup* messages may be indicative of the number of layers used for primary cells and the bandwidth of one or more secondary cells used for carrier aggregation (CA).

According to embodiments, the maximum modulation degradation (i.e. *DegMod*) can be determined as defined in Equation 5.

$$DegMod = (MaxBitsPerSymDevice - MaxBitsPerSymNetwork)/MaxBitsPerSymDevice$$

$$(5)$$

where *MaxBitsPerSymDevice* represents the maximum bits per symbol that the device can support; and *MaxBitsPerSymNetwork* represents the maximum bits per symbol the network uses.

In some embodiments, *MaxBitsPerSymNetwork* can be obtained from the OTA control messages between the network device and the base station. For example, in the case of LTE downlink (DL), inclusion of the parameter *altCQI-Table-r12* in the *rrcConnectionReconfiguration* message indicates that the wireless network supports the maximum bits per symbol that the network device can support is 8 bits (i.e. *MaxBitsPerSymDevice* = 8) and therefore this parameter further indicates the wireless network supports 256-QAM (quadrature amplitude modulation). Similarly, inclusion of the parameter *altCQI-Table-1024QAM-r15* in the *rrcConnectionReconfiguration* message indicates that wireless network supports the maximum bits per symbol that the network device can support is 10 bits (i.e. *MaxBitsPerSymDevice* = 10) and therefore this parameter further indicates that the wireless network supports 1024-QAM.

However, if neither of parameters *altCQI-Table-r12* nor *altCQI-Table-1024QAM-r15* is included in the *rrcConnectionReconfiguration* message, it is unknown whether the network supports 256QAM or 1024QAM. It is understood that omission or exclusion of the above noted parameters would merely mean that the network device is not located within signal coverage where those modulations (i.e. QAM-256, QAM-1024) are used. In such cases, crowdsourcing which can be defined as a method of collecting results from different users within the same wireless network, can be used to determine where the maximum modulation order is recorded for other network devices on the same wireless network in the same geographical area with good signal coverage. Alternatively, public information, for example an industry norm or private information may be used (e.g. it is known that this mobile network operator (MNO) supports 256-QAM) to determine the maximum modulation order applicable to the network device in question. Lastly, the maximum modulation order may be considered to be the maximum modulation assigned to the network device. However, using the maximum modulation assigned to the network device may not be sufficiently accurate especially when the UE has a low signal-to-noise ratio (SNR).

According to embodiments, the code rate degradation (i.e. *DegCode*) can be determined as defined in Equation 6.

$$DegCode = (MaxCodeRateDevice - MaxCodeRateNetwork)/MaxCodeRateDevice$$

(6)

where *MaxCodeRateDevice* represents the maximum code rate supported by the network device; and *MaxCodeRateNetwork* represents the maximum code rate used by the wireless network for transmission.

In various embodiments, *MaxCodeRateNetwork* can be obtained from the wireless network specification. For example, in the case of LTE, a TBS table is provided for each modulation order which specifies the code rate for different spectrum (e.g. physical resource block (PRB)) allocations. The same information can be provided by signaling. Alternatively, *MaxCodeRateNetwork* can be obtained using crowdsourcing, public information, an industry norm, or private information. Lastly, *MaxCodeRateNetwork* can be obtained using the maximum code rate assigned to the network device, however, it is understood that may not be very accurate especially when the UE is has a low signal-to-noise ratio (SNR).

According to the second method, the deployed network speed degradation can be calculated based on the difference between the maximum network speed that the network device can support (i.e. *DeviceMaxSpeed)* and the maximum theoretical network speed (i.e. *MaxThNWSpeed*) which can be determined as defined in Equation 7.

$$DegNW = (DeviceMaxSpeed - MaxThNWSpeed)/DeviceMaxSpeed \quad (7)$$

where *MaxThNWSpeed* is defined as the maximum possible data speed achievable under perfect signal conditions with no congestion over the bandwidth allocated by the network.

According to embodiments, *MaxThNWSpeed* can be calculated as follows. The appropriate modulation and TBS index table (i.e. *ModTBSIndexTable*) can be selected from the wireless network's specifications based on the maximum modulation or *MaxBitsPerSymNetwork* and the number of PRBs. Subsequently, the maximum TBS index (i.e. *maxITBS*) can be determined from the selected modulation and TBS index table as defined in Equation 8.

$$maxITBS = max(ModTBSIndexTable) \quad (8)$$

The maximum transport block size (i.e. *maxTBS)* over the given bandwidth of a deployed carrier (e.g. *BWPRB*) can be obtained using the maximum TBS index (i.e. *maxITBS*) and the maximum spatial layers used by the wireless network (i.e. *MaxLayersNetwork*), as defined in Equation 9.

$$maxTBS = TBSLookup\ (maxITBS,\ MaxLayersNetwork \times BWPRB) + ECbits$$

(9)

where *TBSLookup* is a lookup table used to obtain the TBS over a variety of ranges of bandwidths. It is understood that typically, *TBSLookup* is defined in the cellular protocol specification. In addition, *ECbits* is indicative of error checking bits.

The maximum theoretical network speed (i.e. *MaxThNWSpeed*) can be obtained by determining the sum of the maximum TBS of all deployed carriers (i.e. primary and secondary carriers) and dividing the sum of the maximum TBS by the transmit time interval (*TTI),* as defined in Equation 10.

$$MaxThNWSpeed = (\textstyle\sum maxTBS)/TTI \quad (10)$$

The following provides examples for determining the network speed degradation due to the deployed network using two methods as defined above. For both of these examples, the following LTE DL system is assumed.

Device:

- *MaxBWDevice* = 60 MHz = 300 PRBs
- *MaxLayersDevice* = 4
- *MaxBitsPerSymbolDevice* = 8
- *MaxCodeRateDevice* = 0.60

Network:

- *Primary Cell Bandwidth* = 20 MHz = 100 PRBs
- *Secondary Cell 1 Bandwidth* = 15 MHz = 75 PRBs
- *Secondary Cell 2 Bandwidth* = 5 MHz = 25 PRBs
- *MaxLayersNetwork* = 2
- *MaxBitsPerSymbolNetwork* = 6
- *MaxCodeRateNetwork* = 0.60

Before calculating the network speed degradation due to the deployed network using the first method defined above, the maximum bandwidth deployed by the MNO including carrier aggregation (i.e. *MaxBWNetwork*) needs to be obtained. *MaxBWNetwork* is determined based on the *Primary Cell Bandwidth* and the *Secondary Cell Bandwidths.* As such, in this example, *MaxBWNetwork* is 40 MHz including carrier aggregation (i.e. 20 MHz + 15 MHz + 5 MHz = 40 MHz).
In accordance with the first method defined above, the spectral bandwidth degradation (i.e. *DegBW*) can be determined using Equation 3.

$$DegBW = (MaxBWDevice - MaxBWNetwork)/MaxBWDevice$$
$$= (60\ MHz - 40\ MHz) / 60\ MHz = 33.33\%$$

The spatial multiplexing degradation (i.e. *DegSpatial*) can be determined using Equation 4.

$$DegSpatial = (MaxLayersDevice - MaxLayersNetwork)/MaxLayersDevice$$
$$= (4 - 2)/4 = 50\%$$

The maximum modulation degradation (i.e. *DegMod*) can be determined using Equation 5.

$$DegMod = (MaxBitsPerSymDevice - MaxBitsPerSymNetwork)/MaxBitsPerSymDevice$$
$$= (8 - 6)/8 = 0.25 = 25\%$$

The code rate degradation (i.e. *DegCode*) can be determined using Equation 6.

$$DegCode=(MaxCodeRateDevice - MaxCodeRateNetwork)/MaxCodeRateDevice$$
$$= 0.6 - 0.6 / 0.6 = 0$$

According to embodiments, for the above example, based on the individual degradations determined above, the percent degradation due to deployed network (i.e. *DegNW*) can be determined using Equation 2.

$$DegNW = 1 - (1 - DegBW) \times (1 - DegSpatial) \times (1 - DegMod) \times (1 - DegCode)$$

$$= 1 - (1 - 0.3333) \times (1 - 0.5) \times (1 - 0.25) \times (1 - 0) = 0.75 = 75\%$$

In accordance with the second method as defined above, determining the network speed degradation due to the deployed network is performed at least in part using lookup tables. For this example, the lookup tables used are obtained from the 3rd Generation Partnership Project (3GPP) Technical Specification (TS) 36.213 version 15.3.0. Therefore, for the LTE system of this example, the *ECbits* is 24 bits and the *TTI* is 0.001 sec.

In accordance with the second method defined above, the deployed network speed degradation (i.e. *DegNW*) can be determined based on the difference between the maximum speed that the network device can support (i.e. *DeviceMaxSpeed)* and the maximum theoretical wireless network speed (i.e. *MaxThNWSpeed)*. As such, each of the maximum speed that the network device can support (i.e. *DeviceMaxSpeed)* and the maximum theoretical wireless network speed (i.e. *MaxThNWSpeed*) are to be determined.

As illustrated above, the maximum theoretical network speed (*MaxThNWSpeed*) can be obtained using Equations 8 to 10 presented above.

Provided that *MaxBitsPerSymbolNetwork* is 6, the maximum modulation is 64-QAM. As such, the modulation and TBS index table (i.e. *ModTBSIndexTable*) to used for this example is the table corresponding to 64-QAM modulation. In this example, Table 7.1.7.1-1 in the 3GPP TS 36.213 will be used, and therefore, in accordance with Equation 8, the maximum TBS index (i.e. *maxITBS*) is obtained as being:

$$maxITBS = max(ModTBSIndexTable) = 26$$

In the LTE DL system of this example, the maximum transport block size (i.e. *maxTBS)* is obtained using Equation 9 if less than 55 PRBs are allocated. Otherwise, *maxTBS* will be determined as follows:

$$bmaxTBS = TBSLookup(maxITBS, BWPRB)$$

$$maxTBS = TBSTranslation\ (bmaxTBS) + ECbits$$

where TBSTranslation represents one-to-N layer TBS translation.

Provided that *MaxLayersNetwork* is 2, *TBSTranslation* is performed based on Table 7.1.7.2.2-1 in the 3GPP TS 36.213. The maximum transport block sizes (i.e. *maxTBS)* for Primary Cell, Secondary Cell 1 and Secondary Cell 2 can be determined as defined below, respectively:

For Primary Cell:
*Primary Cell Bandwidth* = 20 MHz = 100 PRBs *maxTBS* is calculated using *TBSTranslation* as 100 PRBs (>55) are allocated:

$$bmaxTBS = TBSLookup(26,100) = 75376$$

$$maxTBS = TBSTranslation(bmaxTBS) + 24 = 149776+24 = 149800$$

For Secondary Cell 1:
*Secondary Cell 1 Bandwidth* = 15 MHz = 75 PRBs *maxTBS* is calculated using *TBSTranslation* as 75 PRBs (>55) are allocated:

$$bmaxTBS = TBSLookup\ (26,75)=55056$$

$$maxTBS = TBSTranslation(bmaxTBS) + 24 = 110136 + 24 =110140$$

For Secondary Cell 2:
*Secondary Cell 2 Bandwidth* = 5 MHz = 25 PRBs *maxTBS* is calculated using Equation (9) as only 25 PRBs (<55) are allocated:

$$maxTBS = TBSLookup\ (26,\ 2{\times}25) = TBSLookup\ (26,50) = 36696$$

Based on the maximum transport block sizes (i.e. *maxTBS*) determined above for each of the Primary Cell, Secondary Cell 1 and Secondary Cell 2, the maximum theoretical network speed (i.e. *MaxThNWSpeed*) can be obtained in accordance with Equation 10. For example, *MaxThNWSpeed* can be determined by calculating the sum of the maximum TBS of all deployed carriers (i.e. primary and secondary carriers) and then dividing that sum of the maximum TBS by the transmit time interval (*TTI*), as defined below:

$$MaxThNWSpeed = (149800{+}110140{+}36696)/0.001 = 296.636\ \text{Mbps}$$

The determination of the maximum speed that the network device can support (i.e. *DeviceMaxSpeed)* can be defined as follows. As stated above, in the LTE system of this example, *MaxBWDevice* is 60 MHz = 300 PRBs. Also, provided that *MaxLayersNetwork* is 4, *TBSTranslation* is performed based on Table 7.1.7.2.5-1 in the 3GPP TS 36.213. Further, provided that *MaxBitsPerSymbolDevice* is 8, 256-QAM is the maximum modulation supported by the network device of this example. As such, the modulation and TBS index table (i.e. *ModTBSIndexTable*) to be used is the table corresponding to 256-QAM modulation, which is Table 7.1.7.1-1A in the 3GPP TS 36.213.
In accordance with Equation 8 presented above, the maximum TBS index (i.e. *maxITBS*) is obtained from Table 7.1.7.1-1A in the 3GPP TS 36.213 and therefore *maxITBS* is 33:

$$maxITBS = max(ModTBSIndexTable) = 33$$

As presented above, for the LTE DL system in this example, the maximum transport block size (i.e. *maxTBS)* is determined as follows, wherein 55 or more PRBs are allocated:

$$bmaxTBS = TBSLookup(maxITBS,\ BWPRB)$$

$$maxTBS = TBSTranslation\ (bmaxTBS) + ECbits$$

where *TBSTranslation* represents one-to-N layer TBS translation.
Based on the above, for 100 PRBs:

$$bmaxTBS = TBSLookup\ (33,\ 100) = 97896$$

$$maxTBS = TBSTransition(bmaxTBS) + 24$$
$$= TBSTransition(97896) + 24 = 391656 + 24 = 391680$$

For 300 PRBs:

$$maxTBS = 391680 \times 3 = 1175040$$

Therefore, the maximum speed that the network device can support (i.e. *DeviceMaxSpeed)* is determined as follows:

$$DeviceMaxSpeed = 1175040/0.001 = 1175\ \text{Mbps}$$

Upon determination of both the maximum speed that the network device can support (i.e. *DeviceMaxSpeed*) and the maximum theoretical wireless network speed (i.e. *MaxThNWSpeed*), the percentage of the network speed degradation due to the deployed network can be determined according to Equation 7.

$$DegNW = (1175 - 296.636)/1175 = 0.748 = 74.8\%$$

As illustrated above, the network speed degradations due to the deployed network as determined using the first and second methods are substantially equal (i.e. only 0.2% difference). A reason for this difference may be that the *TBSLookup* table defined for the LTE system is non-linear with respect to the assigned spectrum.

*Degradation due to Network Congestion*

According to embodiments, network congestion degradation can be determined based on a difference between the maximum bandwidth (e.g.. signal spectrum) that can be provided by the wireless network (i.e. *MaxBWNetwork*) and the actual bandwidth (e.g. signal spectrum) that is assigned to the network device by the base station (e.g. the number of PRBs assigned for NR and LTE) when there is known data to be sent (e.g. this may be indicative of a full buffer scenario with respect to the network device).

In a cellular network, network congestion can occur either at the wireless link portion (i.e. front-end) or at the wired portion (i.e. back-end). Front-end congestion is more common and can occur because the radio frequency (RF) spectrum needs to be shared with other wireless devices, and therefore the target device may be allocated less signal spectrum for communication than required for the communication. This may ultimately cause network speed degradation.

Back-end congestion occurs, for example, when a router in the fixed line path becomes congested. For DL communication, such back-end congestion can result in data starvation at the base station, and therefore the base station may accordingly assign less spectral resources to the wireless device. For the UL communication, back-end congestion can result in buffer overflow at the base station, and therefore the base station may restrict the inflow of data or data transmissions from a wireless device. The base station can restrict the data inflow from a wireless device by assigning less UL spectral resources to that wireless device.

In general, either of front-end congestion or back-end congestion can prompt the base station to assign less spectral resources to a wireless device. The network speed degradation due to network congestion in one transmit time interval (TTI) can be determined as defined in Equation 11.

$$DegCongestion = (MaxBWNetwork - AllocatedBW)/MaxBWNetwork \qquad (11)$$

where *AllocatedBW* is the allocated bandwidth in one TTI for all carriers (i.e. primary and secondary carriers); *AllocatedBW* can be obtained from control messages that are received from the base station (e.g. In the case of LTE DL, the *AllocatedBW* in resource blocks per carrier per subframe is signaled from the base station in the physical layer downlink grants).

It should be noted that in order to determine the average congestion for a test period, the average network speed degradation due to congestion over all TTIs during the test period are to be calculated.

Some parts of the signal spectrum (e.g. PRBs) cannot be assigned to wireless devices as these parts are used to broadcast the system information, for example, master information block (MIB) and system information blocks (SIB) broadcasted in LTE primary synchronization (PSS) / secondary synchronization signal (SSS).

It is understood that broadcast signaling overhead may be considered to be a small portion of the total spectrum and therefore may be ignored. However, in order to improve accuracy, the spectrum used for broadcast signaling should be subtracted from the *MaxBWNetwork.* The amount of spectrum used for broadcast signaling can be calculated based on the specification of the network and the signaling. For example, in case of the LTE system, PSS/SSS is sent every 5ms and uses 2 symbols $\times$ 6PRB (it is understood that there are typically 12 usable symbols in 1 PRB), and the MIB is sent every 10ms and uses 4 symbols $\times$ 6 PRBs. Therefore, the average PRBs used for broadcast signaling for an LTE system can be determined to be approximately $1/5 \times 6 \times 2/12 + 1/10 \times 6 \times 4/12 = 0.4$ PRBs which may be considered as a small fraction of the *MaxBWNetwork,* especially when considering that *MaxBWNetwork* is typically greater than 50PRBs.

In some cases, it can be beneficial to determine whether network congestion is associated with the front-end of the network or the back-end of the network because back-end congestion may occur due to a server. Whether the network congestion is associated with the front-end or back-end, the congestion can be identified using one or more of the following methods.

According to embodiments, a method to identify whether the network congestion is associated with the front-end or back-end can be based on a speed pattern. For example, when network congestion is plotted in terms of speed and time (i.e. speed *vs* time), the pattern of the plotted graph can indicate where the network congestion is occurring. As an example, base station schedulers typically schedule the wireless link using parts of the spectrum (i.e. all users get a part of the spectrum), whereas routers schedule the wireless link using larger blocks (e.g. protocol data units (PDUs) with size MTU=1600bytes). As such, when network congestion is plotted in terms of speed and time, a front-end congestion graph looks smoother (e.g. no instances of zero allocation), whereas a back-end congestion graph looks jagged (e.g. due to data interruptions where some TTIs have no spectrum allocation).

According to embodiments, another method to identify whether network congestion is associated with the front-end or the back-end of the network can be associated with latency increase. For example, latency and jitter patterns can indicate where network congestion is occurring. As an example, in the UL, the buffer for the wireless link is present in the wireless device, and as such the size and value of the associated delays are understood to be known. However, if the latency increases from the expected value, this can be an indication that there is buffering somewhere in the fixed line portion, thereby indicating that back-end congestion is occurring.

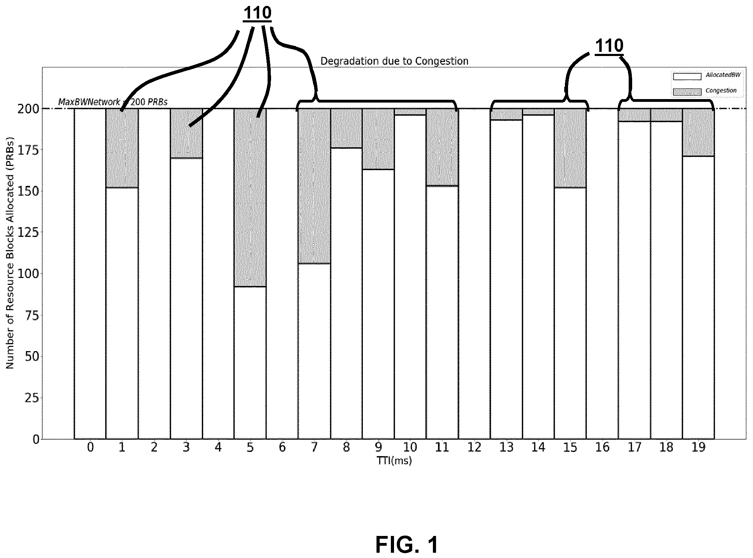

FIG. 1 illustrates an example of measured congestion levels per TTI over a test period, in accordance with embodiments of the present disclosure. Referring to FIG. 1, the shaded areas **110** indicate where network congestion occurred. As stated above, network congestion is obtained based on a difference between the maximum bandwidth (e.g. signal spectrum) that can be allocated by the Evolved Node B (eNB) (i.e. *MaxBWNetwork*) and what the actual bandwidth (e.g. signal spectrum) allocated by the eNB (i.e. *AllocatedBW*) in that TTI.

The following provides an example of how network speed degradation due to network congestion can be calculated in accordance with the method defined above. For the following example, the following LTE DL system is assumed where the allocations in a given subframe are as follows:

- *Primary Cell Bandwidth* = 75 PRBs
- *Secondary Cell 1 Bandwidth* = 5 PRBs
- *Secondary Cell 2 Bandwidth* = 5 PRBs
- *MaxLayersNetwork* = 2
- *MaxBitsPerSymbolNetwork* = 6
- *MaxCodeRateNetwork* = 0.60

In the LTE DL system illustrated above, the *AllocatedBW* is 85 PRBs which can be determined as follows:

$$AllocatedBW = 75 + 5 + 5 = 85 \text{ PRBs}$$

For the above defined example network, assuming the broadcast overhead is 0.4 PRBs per carrier, the maximum bandwidth (e.g. signal spectrum) that can be allocated by the eNB (i.e. *MaxBWNetwork*) can be determined as follows:

$$MaxBWNetwork = 100 + 75 + 25 - 0.4 \times 3 = 198.8$$

Based on the Equation 11, the network speed degradation due to congestion for the subframe can be defined as:

$$DegCongestion = (198.8 - 85) / 198.8 = 57.24\%$$

For this example, based on the above the network capability for the spectral resource (i.e. *MaxBWNetwork*) was 198.8 PRBs, however the wireless device was only allocated 85 PRBs (i.e. *AllocatedBW* = 85 PRBs). As such, it can be considered that there is network speed degradation due to network congestion.

*Degradation due to Signal Strength*

According to embodiments, network speed degradation due to signal strength can be calculated based on a difference between the maximum possible modulation and coding rate and the modulation and coding rate assigned by the base station on the link. When signal quality is low, the wireless network assigns a modulation and coding rate lower than the maximum possible modulation and coding rate. As a result, the transport block size allocated by the base station is less than the maximum possible transport block size. This can result in the network speed degradation. The network speed degradation due to signal strength within a TTI can be determined as defined in Equation 12.

$$DegSignal = (maxTBS - allocatedTBS)/maxTBS \qquad (12)$$

where *maxTBS* is indicative of the maximum transport block size that can be transmitted on the link, and *allocatedTBS* is indicative of the actual transport block size that is sent on the link.

According to embodiments, *maxTBS* can be determined in a similar manner as can be used to determine network speed degradation due to the deployed network. In various embodiments, *allocatedTBS* can be obtained from the over-the-air (OTA) control messages that are received from the base station. For example, in the case of a LTE DL system, the DL grant message contains the TBS index (i.e. $I_{TBS}$) which was allocated in that subframe. The *maxTBS* can then be calculated as defined in Equation 9 presented above.

It is understood that whenever failure occurs during decoding of the transport block (e.g. a block error), there is a 100% network speed degradation due to signal strength, for example the *allocatedTBS* is zero (0).

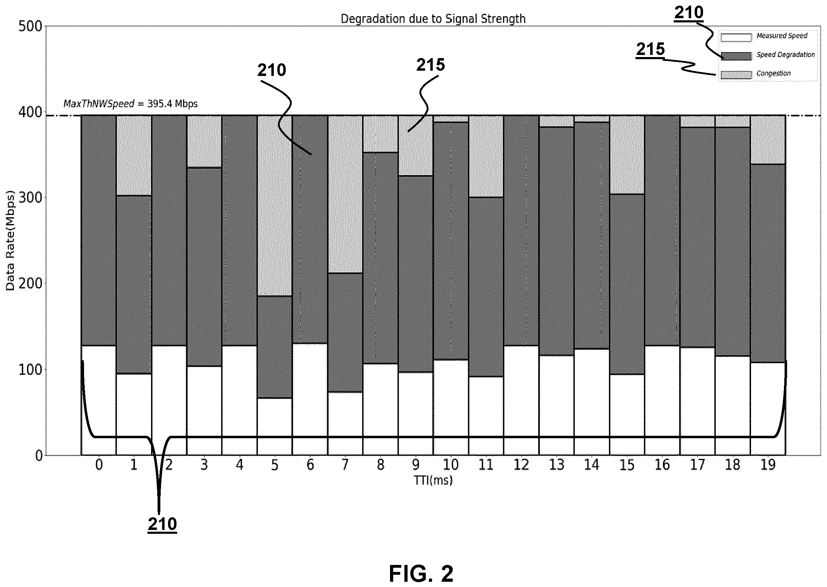

FIG. 2 illustrates an example of measured signal degradation levels per TTI over a certain test period, in accordance with embodiments of the present disclosure. Referring to FIG. 2, the dark shaded region **210** in each TTI is indicative of the extent by which the measured speed differs from the maximum speed (i.e. the extent of speed degradation). Further illustrated in FIG. 2, the difference between the maximum possible speed that can be supported by the device in a TTI (i.e. *DeviceMaxSpeed)* and the maximum theoretical network speed (i.e. *MaxThNWSpeed*) is present due to the allocation of less signal spectrum as a result of the network congestion **215.**

According to embodiments, an example is provided in order define how the network speed degradation due to the signal strength is calculated in accordance with the method illustrated above. For the following example, the LTE DL system is the same as the one in the previous example presented above regarding the determination of network speed degradation due to the deployed network. Further, for this example a subframe is considered to be where the DL grant signaled *allocatedTBS* is 10680 bits, and RB is 20 bits.

According to the Equation 9, *maxTBS* can be determined as follows:

$$maxTBS = 2 \times (TBSLookup(26, 20)) + 24 = 2 \times 9144 + 24 = 18312 \text{ bits.}$$

Therefore, the network speed degradation due to signal strength is determined as follows:

$$DegSignal = ((18312 - 10680) / (18312) = 41.68\%$$

Based on the above, it can be implied that the capability of the wireless network (e.g. the maximum theoretical network speed (i.e. *MaxThNWSpeed*)) is 18312 bits, however the network device only received 10680 bits thereby indicating a 41.68% network speed degradation.

*Degradation Due to Device Problems*

According to embodiments, network speed degradation due to network device problems can be defined as a measure of the decrease in data speed caused by network device problems including technical issues associated with the network devices such as antenna malfunction, device over-heating and various known interoperability issues.

A first network device problem that can trigger network speed degradation can be antenna malfunction. When an antenna associated with the network device is malfunctioning, the performance of the network device will be negatively impacted, for example, multiple-input and multiple-output (MIMO) capability may be impacted and signal-to-noise ratio (SNR) may be lower. Furthermore, these antenna malfunctions may cause the base station to assign a lower modulation and coding scheme (MCS) to that network device. In some embodiments, antenna malfunction can be detected by monitoring changes in the signal qualities of the two antennas associated with the network device. If it is known that the device is non-mobile, antenna malfunction can be also detected by searching events where signal quality is significantly decreased compared to historical signal quality values for that network device.

According to embodiments, network speed degradation due to antenna malfunction can be determined using one or more of the following options. When one antenna is malfunctioning in the network device, the difference in grants between the two antennas can be used to determine the network speed degradation over a certain TTI. For example, if a first antenna of the network device was granted 1000 bits and another antenna of the network device was granted 250 bits, the network speed degradation can be considered to be 750 bits in that specific TTI. However, if information regarding the grants is not available for one of the two antennas of the network device, the resulting MCS degradation can be estimated based on the difference in signal quality between the two antennas of the network device.

According to embodiments, network speed degradation due to antenna malfunction can be determined by comparing a drop in signal quality to the historical signal quality. In particular, the resulting MCS degradation and TBS can be estimated based on the difference in signal quality between the antennas. For example, it can be estimated that a 3-dB drop in signal quality would result in approximately half of the TBS being allocated.

According to embodiments, another network device problem that can trigger network speed degradation is over-heating of the network device. If the temperature of a network device exceeds a threshold, the network device may reduce its maximum power output in order to reduce the operational temperature. The reduced maximum power output can result in lower UL modulation, and therefore the network device would be able to determine when the over-heating occurs and how much the signal power degrades as a result of the over-heating. According to embodiments, the signal power degradation can be determined by estimating the resulting MCS degradation and TBS. For example, a 3-dB drop in output power can result in approximately half of the TBS being allocated. However, if the base station does not request the network device to transmit at its maximum power, there may be no signal power degradation despite of the over-heating of the network device.

According to embodiments, another device problem that can trigger network speed degradation is various known interoperability issues which may affect data speed between certain network devices with specific firmware versions and certain base stations vendors. When the various known interoperability issues occur, those issues can be collected and saved. Upon the execution of a speed test of the network device by a user, the record of the collected interoperability issues can be queried and communicated to the user in order for a determination of the degree of network speed degradation resulting therefrom.

*Backhaul and End Server Bottle Necks*

As previously presented, the backhaul and end servers are often bottleneck points in wireless communication where very high speed wireless links (e.g. 5G NR (New Radio) in Millimeter wave (mmWAVE)) are used and where links that are greatly affected by installation location and direction of wave propagation are used. As such, conventional network speed measurement methods and tools are not always beneficial as the conventional methods and tools cannot accurately analyze the network speed degradation due to network congestion at the backhaul and end servers. In fact, conventional network speed measurement methods and tools may only measure network speed at the end server.

According to embodiments, the network speed degradations from the UE's peak speed can be divided into the following parameters:

- Degradation due to network configuration (e.g. amount of BW, MIMO, and modulation)
- Degradation due to signal quality (e.g. SNR)
- Degradation due to congestion

Based on the above degradation parameters, a best case throughput can be determined as defined in Equation 13. The best case throughput may refer to the maximum throughput that the UE can experience without congestion at a certain location. As there is no congestion, the throughput should be only affected by degradation due to signal quality (e.g. SNR) and degradation due to network configuration.

$$\text{Best case throughput} = \text{Measured throughput}$$
$$+ \text{Throughput degradation due to congestion} \qquad (13)$$

Referring to Equation 13, the congestion includes several types of congestions, for example congestion in radio access network (RAN), and congestion in the backhaul and congestion at the end server. One of the most common types of congestion can be RAN (e.g. OTA) congestion as a RAN link is often shared by many users.

In various embodiments, however, one or more of the portion of the congestion that occurs in RAN, the portion of the congestion that occurs at the backhaul and the portion of the congestion that occurs at the end server can be speculated by reviewing and analyzing various statistics (e.g. variance and probability density function (PDF)) in association with the congestion values and/or transport layer statistics (e.g. dropped TCP (Transmission Control Protocol) packets).

Furthermore, given that RAN congestion can change substantially throughout the day, various embodiments of the present disclosure can provide a snapshot in time of the congestion due to the backhaul or end server congestion or bottlenecks. Put another way, instantaneous values of backhaul and end server congestion may be predicted.

According to embodiments, crowdsourcing of user data can be utilized to determine network speed degradations. For example, in various embodiments, crowdsourcing can be used for identifying normal levels of congestion, predetermining performance without needing to run a test, predetermining which wireless network performs best in a specific area, acquiring missing information needed for network speed degradation calculations, or any combination of the aforementioned.

For example, when neither parameters of *altCQI-Table-r12* nor *altCQI-Table-1024QAM-r15* is included in the *rrcConnectionReconfiguration* message, determining whether the network supports 256QAM or 1024QAM can be performed based on the information collected from different users within the same network. This collected information can be considered to be crowdsourced information.

*Presenting Results to the User*

According to embodiments, various factors that cause network speed degradation can be identified and determined, and the determined results can be presented to a user in a variety of ways. For example, the determined results can be provided to the user in one or more of the following configurations.

- percentages of the maximum device speed (e.g. in pie chart)
- numeric values (e.g. actual network speed in Mbps)
- moving averages (MA) for degradations and speed (e.g. time vs MA of speed)
- probability density functions (PDFs) of degradations and speed
- qualitative indicator for each degradation and speed (e.g. good, normal, bad - in some embodiments, the crowdsourcing data can be used as a guide to what degradation or speed is considered good, normal, or bad)
- a graphical mean (e.g. pie chart) demonstrating each of the measured network speed and network speed degradation factors in percentage.
- a snapshot which predicts instantaneous values of the congestion due to the, backhaul or end server bottlenecks

Regarding the graphical means (e.g. pie chart), it should be noted that the measured speed and the determined factors contributing to the network speed degradation can be independently determined. It should be also noted that the summation of all these values (i.e. measured speed and the determined factors contributing to the network speed degradation) can be defined as being equal to 100% (i.e. adding all the individual values reflect a 100% value).

*Actionable Remediations*

Various embodiments of the present disclosure can provide the user with high level actionable suggestions based on an analysis and calculations performed with respect to the network speed degradation, in order that the user can improve the data speed based on the suggestions made. Some example suggestions that can be provided in various circumstances are provided below.

According to some embodiments, if it has been determined that the deployed network's capabilities are inferior to other local networks, the following remediations can be provided:

- moving to a different mobile network operator (MNO)
- informing the MNO of their inferior network deployment

According to some embodiments, if it has been determined that the network congestion is higher than other local networks, the following remediations can be provided:

- moving to a different MNO
- informing the MNO of about their high congestion levels
- ensuring that backend link to destination server is not congested

According to some embodiments, if it has been determined that the signal degradation is high (e.g. network speed degradation due to signal strength), the following remediations can be provided:

- using better antennas (e.g. antennas with higher gain)
- relocating the device (e.g. to outside or near a window)
- ensuring that antennas are properly oriented (e.g. upright)

According to some embodiments, if it has been determined that an antenna has degraded signal quality, the following remediations can be provided:

- replacing the antenna that is potentially broken

- ensuring that the antenna is properly oriented (e.g. upright)
- ensuring that the space immediately around the antenna is clear

According to some embodiments, if it has been determined that the network device has an operating temperature outside the temperature tolerance range (e.g. device temperature is over or under the temperature tolerance range) is detected, the following remediations can be provided:

- moving the device to an area where temperature is within the temperature tolerance range of the device

According to some embodiments, if it has been determined that there are detected interoperability's issues, the following remediations can be provided:

- upgrading device firmware
- re-configuring the device
- informing the network operator such that a fix can be applied to the base station

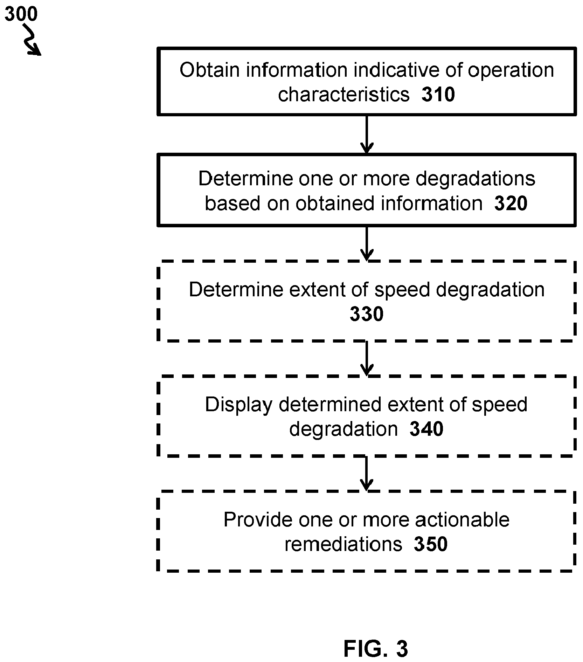

FIG. 3 is a method for managing communication characteristics in a wireless network, in accordance with embodiments of the present disclosure. The method includes obtaining **310**, by the network device, information indicative of operational characteristics of one or more of a configuration of a deployed network, signal strength, network congestion. It will be readily understood that the step of obtaining can be envisioned being as the network device receiving the information indicative of operational characteristics. It can be further understood that the step of obtaining can in addition or alternately be envisioned as identifying, collecting or other action that provides the network device with the information indicative of operational characteristics.

The method further includes determining **320** a degradation associated with each of the one or more of the configuration of the deployed network, signal strength, network congestion and operational characteristics of the network device, based at least in part on the obtained information. According to some embodiments, the determination of a degradation associated with step **320** can be performed by the network device. However, in other embodiments, the determination of the degradation can be performed at a remote location, for example within a cloud network, server or one or more communicatively linked electronic devices.

In some embodiments, the method further includes determining **330**, by the network device, an extent of speed degradation, for example communication speed degradation or network speed degradation, based on each of the determined degradations.

In some embodiments, the method further includes displaying **340** the determined extent of speed degradation to a user in comparison with maximum capabilities of the network device. In some embodiments, the method further includes providing **350**, by the network device, one or more actionable remediations based on the determined extent of network speed degradation.

According to some embodiments, displaying the determined extent of speed degradation is performed by the network device, a server, an electronic device or displayed via a web page or using an application associated with an electronic device.

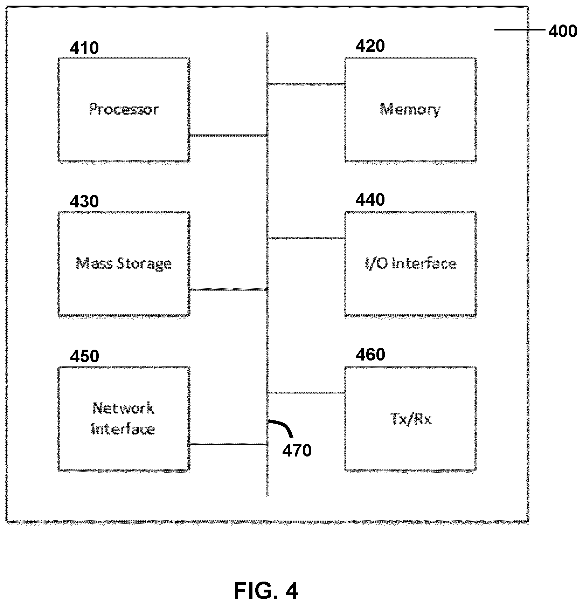

FIG. 4 is a schematic diagram of an electronic device **400** that may perform any or all of the steps of the above methods and features described herein, according to different embodiments of the present invention. For example, network devices, computer devices, wireless gateways, mobility routers, access point devices and core network devices, either virtualized or non-virtualized, can be configured as the electronic device. End-user computers, smartphones, IoT devices, etc. can be also configured as electronic devices.

As shown, the device includes a processor **410**, memory **420**, non-transitory mass storage **430**, I/O interface **440**, network interface **450**, and a transceiver **460**, all of which are communicatively coupled via bi-directional bus **470**. According to certain embodiments, any or all of the depicted elements may be utilized, or only a subset of the elements. Further, the device **400** may contain multiple instances of certain elements, such as multiple processors, memories, or transceivers. Also, elements of the hardware device may be directly coupled to other elements without the bi-directional bus.

The memory **420** may include any type of non-transitory memory such as static random access memory (SRAM), dynamic random access memory (DRAM), synchronous DRAM (SDRAM), read-only memory (ROM), any combination of such, or the like. The mass storage element **430** may include any type of non-transitory storage device, such as a solid state drive, hard disk drive, a magnetic disk drive, an optical disk drive, USB drive, or any computer program product configured to store data and machine executable program code. According to certain embodiments, the memory **420** or mass storage **430** may have recorded thereon statements and instructions executable by the processor **410** for performing any of the aforementioned method steps described above.

It will be appreciated that, although specific embodiments of the technology have been described herein for purposes of illustration, various modifications may be made without departing from the scope of the technology. The specification and drawings are, accordingly, to be regarded simply as an illustration of the invention as defined by the appended claims, and are contemplated to cover any and all modifications, variations, combinations or equivalents that fall within the scope of the present invention. In particular, it is within the scope of the technology to provide a computer program product or program element, or a program storage or memory device such as a magnetic or optical wire, tape or disc, or the like, for storing signals readable by a machine, for controlling the operation of a computer according to the method of the technology and/or to structure some or all of its components in accordance with the system of the technology.

Acts associated with the method described herein can be implemented as coded instructions in a computer program product. In other words, the computer program product is a computer-readable medium upon which software code is recorded to execute the method when the computer program product is loaded into memory and executed on the microprocessor of the wireless communication device.

Acts associated with the method described herein can be implemented as coded instructions in plural computer program products. For example, a first portion of the method may be performed using one computing device, and a second portion of the method may be performed using another computing device, server, or the like. In this case, each computer program product is a computer-readable medium upon which software code is recorded to execute appropriate portions of the method when a computer program product is loaded into memory and executed on the microprocessor of a computing device.

Further, each step of the method may be executed on any computing device, such as a personal computer, server, PDA, or the like and pursuant to one or more, or a part of one or more, program elements, modules or objects generated from any programming language, such as C++, Java, or the like. In addition, each step, or a file or object or the like implementing each said step, may be executed by special purpose hardware or a circuit module designed for that purpose.

It is obvious that the foregoing embodiments of the invention are examples and can be varied in many ways. Such present or future variations are not to be regarded as a departure from the spirit and scope of the invention, and all such modifications as would be obvious to one skilled in the art are intended to be included within the scope of the following claims.

**Claims**

1. A method for evaluating communication in a wireless network, the method comprising:

    obtaining (310), by a network device, information indicative of operational characteristics of one or more of a configuration of a deployed network, signal strength, network congestion and the network device; and
    determining (320) one or more degradations based at least in part on the obtained information, each of the one or more degradations associated with one or more of the configuration of the deployed network, the signal strength, the network congestion and the network device.

2. The method of claim 1, wherein the one or more degradations are determined based at least in part on information obtained from one or more of:

    one or more physical layer grants received from a base station; and
    one or more control messages received from a base station.

3. The method of claim 1 or 2, wherein the degradation associated with configuration of the deployed network is determined based on one or more of:

    one or more capabilities of the deployed network including deployed spectral bandwidth, supported spatial multiplexing, supported maximum modulation, and supported maximum code rate; and
    a difference between a maximum speed supported by the network device and a maximum theoretical speed achievable under perfect signal conditions.

4. The method of any one of claims 1 to 3, wherein the degradation associated with the signal strength is determined based on a maximum possible modulation and coding rate and a modulation and coding rate assigned by a base station, the maximum possible modulation being determined based on a maximum possible transport block size, the modulation and coding rate assigned by the base station being determined based on a transport block size allocated by the base station.

5. The method of any one of claims 1 to 4, wherein the degradation associated with network congestion is determined based on difference between a maximum possible bandwidth deployed by the wireless network and an actual bandwidth assigned by a base station.

6. The method of any one of claims 1 to 5, wherein the degradation associated with the network device is determined based on technical issues related to the network device including one or more of malfunctioning antenna, device over-temperature and interoperability issues.

7. The method of any one of claims 1 to 6, wherein one or more of the degradations are determined based at least in part on information obtained through crowdsourcing.

8. The method of any one of claims 1 to 7, further comprising determining (330) an extent of speed degradation based on the determined one or more degradations.

9. The method of claim 8, further comprising displaying (340) the determined extent of speed degradation to a user in comparison with maximum capabilities of the network device and actionable remediations based on the determined extent of speed degradation.

10. The method of claim 9, wherein summation of the determined degradations is equal to the determined extent of speed degradation.

11. A network device comprising:

   a network interface (450) for receiving data from and transmitting data to network devices connected to a wireless network;
   a processor (410); and
   machine readable memory (420) storing machine executable instructions which when executed by the processor configure the network device to:

      obtain (310) information indicative of operational characteristics of one or more of a configuration of a deployed network, signal strength, network congestion and the network device; and
      determine (320) a degradation associated with each of the one or more of the configuration of the deployed network, the signal strength, the network congestion and the network device, based at least in part on the obtained information.

12. The network device of claim 11, wherein the one or more degradations are determined based at least in part on information obtained from one or more of:

   one or more physical layer grants received from a base station; and
   one or more control messages received from a base station.

13. The network device of claim 11 or 12, wherein the degradation associated with configuration of the deployed network is determined based on one or more of:

   one or more capabilities of the deployed network including deployed spectral bandwidth, supported spatial multiplexing, supported maximum modulation, and supported maximum code rate; and
   a difference between a maximum speed supported by the network device and a maximum theoretical speed achievable under perfect signal conditions.

14. The network device of any one of claims 11 to 13, wherein the degradation associated with the signal strength is determined based on a maximum possible modulation and coding rate and a modulation and coding rate assigned by a base station, the maximum possible modulation being determined based on a maximum possible transport block size, the modulation and coding rate assigned by the base station being determined based on a transport block size allocated by the base station.

15. The network device of any one of claims 11 to 14, wherein the machine executable instructions further configure the network device to:

determine (330) an extent of speed degradation based on the determined one or more degradations; and optionally display (340) the determined extent of speed degradation to a user in comparison with maximum capabilities of the network device and one or more actionable remediations based on the determined extent of speed degradation.

FIG. 1

FIG. 2

EP 4 057 674 A1

**300**

```
┌─────────────────────────────────────┐
│  Obtain information indicative of operation │
│       characteristics  310           │
└─────────────────────────────────────┘
                    │
                    ▼
┌─────────────────────────────────────┐
│    Determine one or more degradations │
│    based on obtained information  320 │
└─────────────────────────────────────┘
                    │
                    ▼
┌ ─ ─ ─ ─ ─ ─ ─ ─ ─ ─ ─ ─ ─ ─ ─ ─ ─ ─ ┐
│   Determine extent of speed degradation │
│              330                     │
└ ─ ─ ─ ─ ─ ─ ─ ─ ─ ─ ─ ─ ─ ─ ─ ─ ─ ─ ┘
                    │
                    ▼
┌ ─ ─ ─ ─ ─ ─ ─ ─ ─ ─ ─ ─ ─ ─ ─ ─ ─ ─ ┐
│     Display determined extent of speed │
│           degradation  340           │
└ ─ ─ ─ ─ ─ ─ ─ ─ ─ ─ ─ ─ ─ ─ ─ ─ ─ ─ ┘
                    │
                    ▼
┌ ─ ─ ─ ─ ─ ─ ─ ─ ─ ─ ─ ─ ─ ─ ─ ─ ─ ─ ┐
│       Provide one or more actionable   │
│           remediations  350          │
└ ─ ─ ─ ─ ─ ─ ─ ─ ─ ─ ─ ─ ─ ─ ─ ─ ─ ─ ┘
```

**FIG. 3**

EP 4 057 674 A1

**400**

**410**
Processor

**420**
Memory

**430**
Mass Storage

**440**
I/O Interface

**450**
Network Interface

**460**
Tx/Rx

**470**

FIG. 4

**EUROPEAN SEARCH REPORT**

Application Number

EP 22 16 0573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/222555 A1 (QIAN TIN [US] ET AL) 3 September 2009 (2009-09-03) * paragraph [0017] – paragraph [0020] * * paragraphs [0038], [0042] – [0054], [0064] * * paragraph [0088] – paragraph [0101] * | 1-15 | INV. H04W24/04 ADD. H04W28/18 |
| X | US 2009/257361 A1 (DESHPANDE MANOJ M [US] ET AL) 15 October 2009 (2009-10-15) * paragraph [0022] – paragraph [0024] * * paragraph [0031] – paragraph [0035] * * paragraphs [0053], [0058], [0060] * | 1-15 | |
| A | US 2019/260559 A1 (WU ZUOMIN [CN] ET AL) 22 August 2019 (2019-08-22) * paragraph [0003] – paragraph [0005] * * paragraphs [0132], [0140] – [0146] * * paragraph [0185] – paragraph [0198] * * paragraphs [0221] – [0222], [0235], [0253] – [0255], [0262] – [0264] * * paragraph [0321] – paragraph [0323] * | 1-15 | |

-/--

TECHNICAL FIELDS SEARCHED (IPC)

H04W

The present search report has been drawn up for all claims

| Place of search | Date of completion of the search | Examiner |
|---|---|---|
| Munich | 8 July 2022 | Aulló Navarro, A |

page 1 of 2

Europäisches
Patentamt

European
Patent Office

Office européen
des brevets

# EUROPEAN SEARCH REPORT

Application Number

EP 22 16 0573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BORRIELLO GAETANO ET AL: "Mobilyzer : An Open Platform for Controllable Mobile Network Measurements", PROCEEDINGS OF THE 13TH ANNUAL INTERNATIONAL CONFERENCE ON MOBILE SYSTEMS, APPLICATIONS, AND SERVICES, MOBISYS '15, FLORENCE, ITALY, MAY 18 - 22, 2015, [Online] 18 May 2015 (2015-05-18), pages 389-404, XP055787363, New York, New York, USA DOI: 10.1145/2742647.2742670 ISBN: 978-1-4503-3494-5 Retrieved from the Internet: URL:https://web.eecs.umich.edu/~zmao/Papers/mobilyzer-mobisys15.pdf> [retrieved on 2021-03-18] * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 8 July 2022 | Aulló Navarro, A |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
...........................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 22 16 0573

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2022

| Patent document cited in search report | Publication date | Patent family member(s) | Publication date |
|---|---|---|---|
| US 2009222555 A1 | 03-09-2009 | NONE | |
| US 2009257361 A1 | 15-10-2009 | CN 101523809 A | 02-09-2009 |
| | | EP 2087650 A2 | 12-08-2009 |
| | | JP 5038426 B2 | 03-10-2012 |
| | | JP 5864664 B2 | 17-02-2016 |
| | | JP 2010506452 A | 25-02-2010 |
| | | JP 2011254503 A | 15-12-2011 |
| | | JP 2014180013 A | 25-09-2014 |
| | | KR 20090075711 A | 08-07-2009 |
| | | US 2009257361 A1 | 15-10-2009 |
| | | WO 2008039962 A2 | 03-04-2008 |
| US 2019260559 A1 | 22-08-2019 | BR 112019009052 A2 | 01-10-2019 |
| | | CN 108023666 A | 11-05-2018 |
| | | EP 3528536 A1 | 21-08-2019 |
| | | JP 2020500475 A | 09-01-2020 |
| | | US 2019260559 A1 | 22-08-2019 |
| | | WO 2018082544 A1 | 11-05-2018 |

EPO FORM P0459

For more details about this annex : see Official Journal of the European Patent Office, No. 12/82